# EUROPEAN PATENT APPLICATION

(11) **EP 1 582 249 A1**
(43) Date of publication of application: **05.10.2005**
(21) Application number: 04257113.3
(22) Date of filing: 17.11.2004
(51) Int. Cl.: B01D 39/20, B01D 25/12, B01D 25/176, B01D 25/21

(54) **Filter plate assembly**

(30) Priority: 31.03.2004 MY 0401176
(71) Applicant: Ngee, Lee Cheng, Petaling Jaya 47800 (MY)
(72) Inventor: Ngee, Lee Cheng, Petaling Jaya 47800 (MY)
(74) Representative: Tubby, David George

(57) **Abstract**

A filter plate assembly comprising a base body (1), filter media (5) and frame (10), and wherein the filter media (5) is a rigid or semi-rigid structure made from sintered material.

## Description

### 1. Technical Field

The present invention relates to a filter media for use in assembling a filter plate and use of the assembled filter plate in a filter press. The present invention also relate to the use of a plurality of assembled filter plates to form filter chambers between each other and each assembled filter plate is supported one or both of their sides by a pressing frame.

### 2. Background Art

Filter plates are known in a variety of designs. The basic categories of filter plates are:
a). Recessed chamber filter plates;
b). Membrane filter plates;
c). Combination filter plates (consist of the use of a combination of membrane and recessed chamber filter plates); and
d). Plate and frame filter plates.

Generally, filter plates come in various shapes, such as for example, square, rectangular or round.

In all the above, a filter media made of fabric, needle felt or filter paper are used. The filter media are then configured to fit the desired filter plates. However, these types of filter media have certain disadvantages, such as for example, there is the need to clean the filter cloth in order to improve the discharge of the filtrate and short service life. Another disadvantage is that the filter cloth can degenerate and there is a limit to the pore size of the cloth used.

### 3. Summary of the Invention

The present invention is based on improving the filter plates in such a way that the problems associated with the use of the conventional filter media which are made from fabric, felt and paper are eliminated. This is achieved by replacing the conventional filter media with a filter media made from rigid or semi-rigid filter material. Accordingly, the first aspect of the present invention is that there is provided a filter media made from rigid or semi-rigid filter material.

The filter material used in making the rigid or semi-rigid filter media can be made from sintered material selected from the group consisting of polymer, metal, glass or ceramic. Because the filter material is manufactured using the sintering process, the resultant filter material is porous in nature. Therefore, the second aspect of the present invention is that there is provided a rigid or semi-rigid filter material made from sintered material selected from the group consisting of polymer, metal, glass or ceramic. The polymer used in this invention can be, for example, including but not limited to polyvinylchloride (PVC), polyethylene (PE), polyurethane (PU), polyvinyldifluoride (PVDF), polytetrafluro-ethylene (PTFE) or polypropylene (PP).

The rigid or semi-rigid filter media is mounted on either side of a base body and is held in place by a frame mounted in face to face contact with the filter media to form a filter plate. The shape of the filter plate thus formed according to this invention can be square, round, rectangular, polygon or any other suitable shape. Accordingly, the third aspect of the present invention is that there is provided a filter plate assembly comprising a base body, filter media and frame characterized in that the filter media is mounted on either side the base body and held in place by a frame mounted in face to face contact with the filter media.

The base body of the filter plate assembly made according to this invention has a fluid input port and a fluid output port which allow the entry of slurry and exit of clean filtrate. Provision is made between the filter media and the base body for a filtrate channel into which clean filtrate drains. The filtrate channel leads to the output port for the exit of clean filtrate. Therefore, the fourth aspect of the present invention is that there is provided a filter plate assembly comprising a base body, filter media and frame characterized in that said base body has a fluid input port, a fluid output port and filtrate channel.

An advantage of this invention is that the filter media used in making the filter plate assembly can be replaced easily when necessary. Accordingly the fifth aspect of the present invention is that there is provided a filter plate assembly comprising a base body, filter media and frame characterized in that the filter media is a replaceable one.

Another advantage of this invention is that the chamber depth in which the filtrate drain ducts feed can be varied according to the application required. This is achieved by varying the depth of the chamber in the base body or the thickness of the supporting frame. The thickness of the filter media can then be varied accordingly to fit into the chamber or the supporting frame. Accordingly the sixth aspect of the present invention is that there is provided a filter plate assembly comprising a base body, filter media and frame characterized in that the thickness of the filter media can be varied. In this invention, the preferred chamber depth in which the filter media is to be placed is between 3 millimeter (mm) to 60 millimeter (mm).

Yet another advantage of this invention is that the filter media to be secured onto the base body can be pre-shaped and can be uniformly manufactured in one single production process. This led to substantial saving in production cost and accordingly is one of the preferred embodiments of the present invention.

A further advantage of the present invention is that the filter media made using the sintering process gives a smooth surface finish to the filter media. A smooth surface filter media allows quicker removal of the filter-cake or solid that is trapped on the media surface and easier cleaning of the same. Therefore the filter media of this invention will have longer service life compared to conventional filter media.

A final advantage is that the present invention can also be used for the filtration of gas, vapour and compressed air and this adds value and further application of the invention. On the other hand, the conventional filtration system is used primarily for solid or liquid filtration.

Other objects and features of the present invention will become apparent from the following detailed description considered in connection with the accompanying drawings. It is to be understood, however, that the drawings are designed as an illustration only and not as a definition of the limits of the invention.

### 4. Brief Description of the drawings

In the drawings, wherein similar reference characters denote similar elements throughout the several views:
Figure 1 shows an unassembled filter plate according to the invention.
Figure 2 shows an assembled filter plate according to the invention.
Figure 3 shows a preferred embodiment of the invention.
Figure 4 shows the filtration chamber formed when two assembled filter plates are arranged together for used in a press.

### 5. Detailed description of the Invention

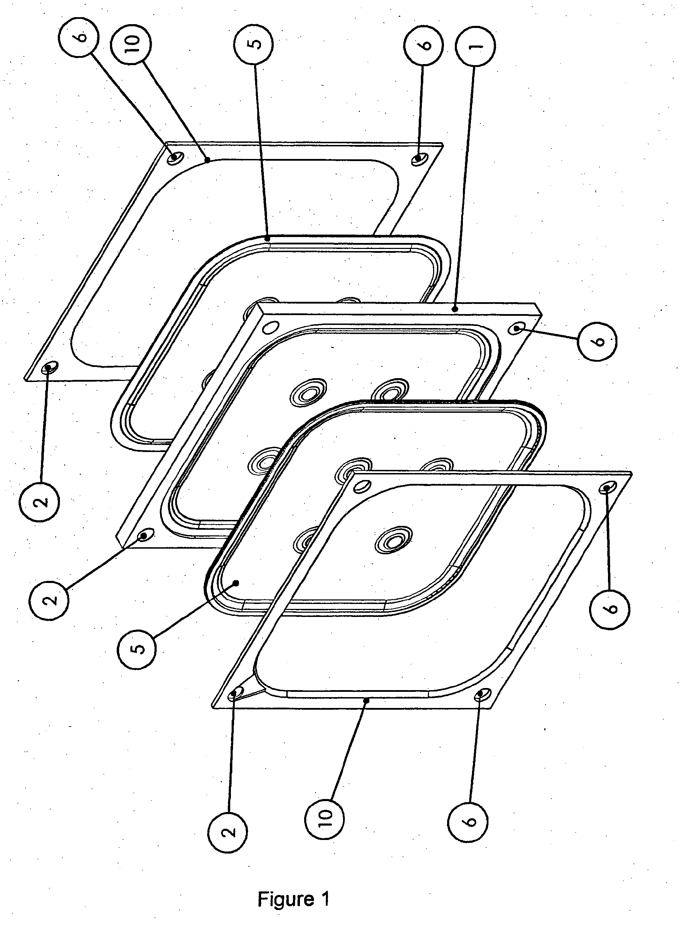

Figure 1 shows an unassembled filter plate, where (1) denotes the base body, (5) denotes the filter media and (10) denotes the frame. The base body and the frame has input port (2) and output port (6).

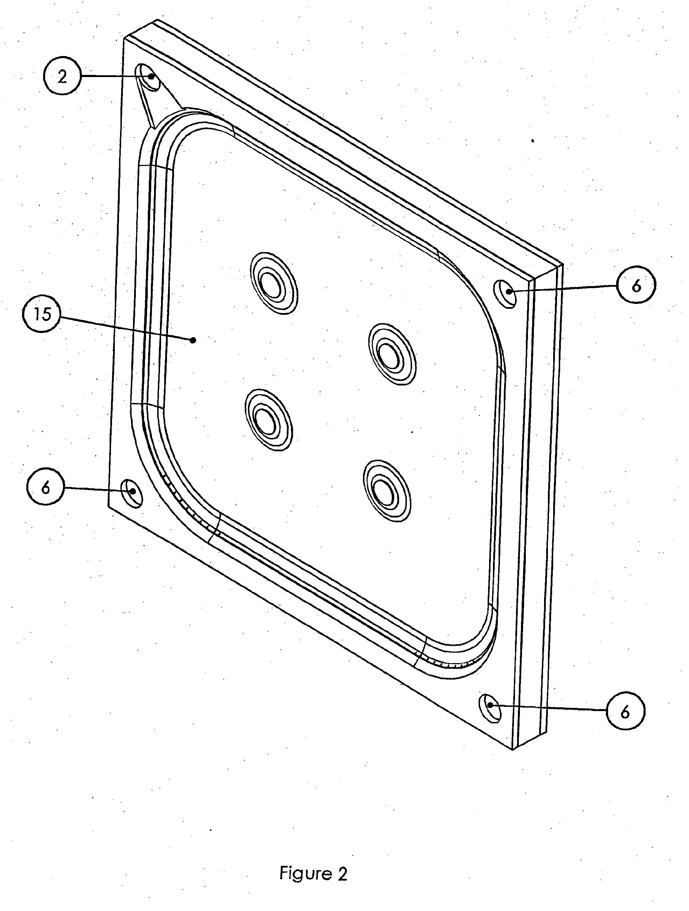

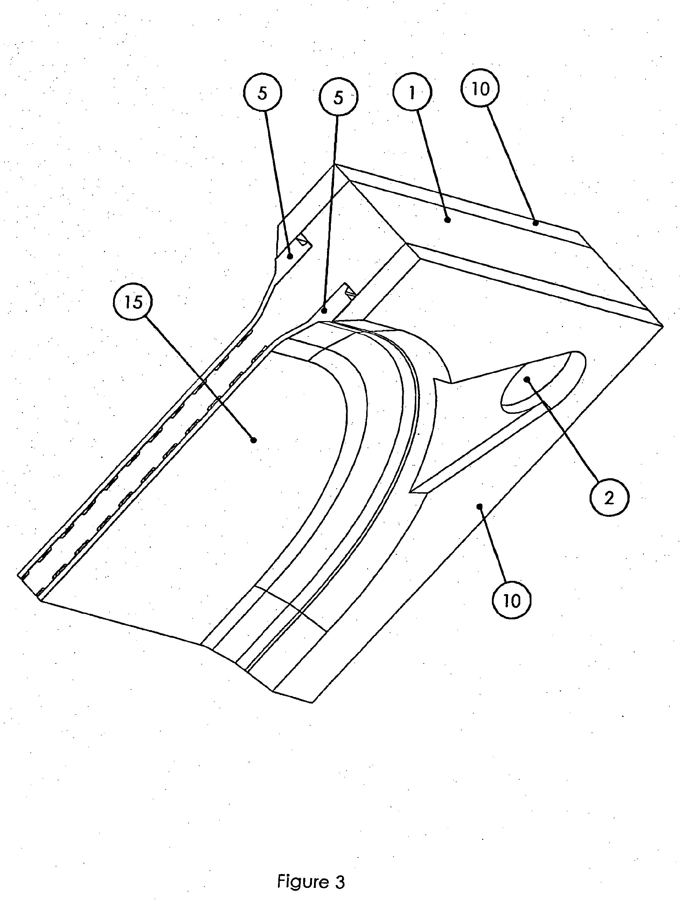

Figure 2 shows an assembled filter plate where (15) is the recess. Figure 3 shows how the filter media (5) is pressed onto the base body (1) by the frame (10).

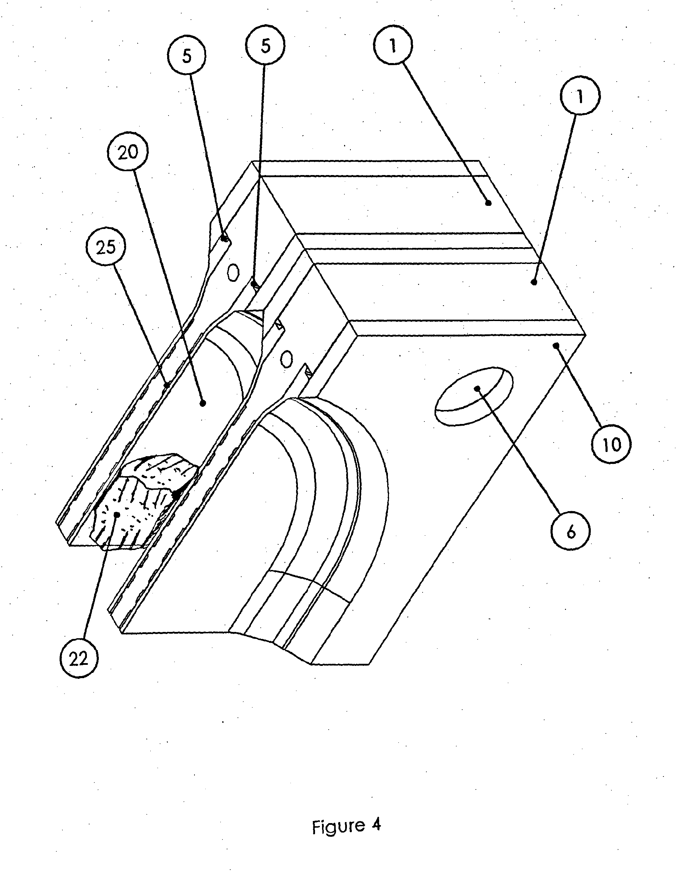

Figure 4 shows the filtration chamber (20) and liquid filtrate (25). The solids (22) are trapped in the filtration chambers and the clear liquid filtrate (25) is drained out through the output port (6).

According to one of the embodiments of the present invention, the base body (1) can be made from any from any suitable material that can withstand chemical, high temperature, pressure and mechanical stress. Preferably the base body is made from alloy, stainless steel or polypropylene. However it is pointed out here that the actual material used in making the base body depends on the application of the invention in the filter press and is usually tailor-made according to the requirements of that particular industry. Generally, the base body of the filter plate is manufactured by moulding, casting process or machined from a raw plate.

The filter media (5) of this invention can be made from sintered materials selected from the group consisting of polymer, metal, alloys, glass or ceramics. Preferably, the filter media of this invention is made from ceramics, aluminium alloy, plastic, stainless steel or polymer. The polymer used in this invention can be for example, including but not limited to polyvinylchloride (PVC), polyethylene (PE), polyurethane (PU), polyvinyldifluoride (PVDF), polytetrafluro-ethylene (PTFE) or polypropylene (PP). It will be appreciated that the terms "plastic and polymer" used in this invention also cover fortified plastic or any additives added to the polymer. Generally, in the sintering process, the raw materials used are either powder or granular in nature. The desired filter media is formed by using a set of mould or die and the powder or granules are compacted into the mould. The mould is then subjected to heat treatment. During the heat treatment process, it is desirable to maintain the heat below the melting point of the powder or granules. The filter media consisting essentially of compacted powder or granules now forms into a solid porous material. The temperature employed and the curing time needed in the sintering process is dependent on the type of raw material used and accordingly, one skill in the art of sintering will be able to appreciate the correct time and temperature to be used. The desired pore size between the particles can be adjusted according to the coarseness of the powder or granules used. Generally, to obtain a larger pore size filter media, a more coarse powder is used. The advantage of the sintering process is that it can be used to produce filter material of various shapes and sizes, including intricate shapes, and the filter materials produce by the sintering process have great strength and stability.

The frame (10) is normally made from the same material used in making the base body. In this invention, the frame is preferably made from steel, aluminium alloy, polymer such as for example, including but not limited to polypropylene, polyethylene or stainless steel. According to an embodiment of this invention, the frame is fabricated by moulding or casting process and then machined to the desired size. Due to the solid nature of the frame, it holds the filter media to the base body very tightly and provides a sealing like effect. Basically, the type of material used in making the frame is dependent on the cost and the application of the frame in assembling the filter plate assembly.

Generally, the base body, the filter media and the frame are assembled according to the embodiment as described. However, further improvement can be made to the frame and filter media assembly. According to another preferred embodiment of the invention, the frame and filter media can be integrated together by moulding or fabricated together by welding technique.

When in use, the invention is highly applicable where the use of conventional filter plate or filter cloth combination cannot achieve the desired results. In particular in the filtration of crude palm oil, the conventional method does not yield the desired result due to the fact that the fibrous materials in the slurry get entangled in the filter cloth weave and choke the filter cloth. This renders the filter cloth being blinded and filterability is affected. Furthermore, cleaning the filter cloth is difficult and this resulted in frequent down time. This invention eliminates the use of filter cloth and hence overcome the problems frequently faced by the palm oil industry.

Another embodiment of the invention is that it provides large filtration areas (> 600 sq. m) and high filtration pressure (typically 20bar). Hence this invention can also be used in the filtration of gas, vapour and air. Conventional apparatus (non filter press) are usually limited in filtration area and pressure.

Accordingly, while only a few embodiments of the present invention have been shown and described, it is obvious that many changes and modifications may be made thereunto without departing from the spirit and scope of the invention.

## Claims

1. A filter media made from rigid or semi-rigid filter material.

2. A filter media as claimed in claim 1 wherein the rigid or semi-rigid filter material is made from sintered material selected from the group consisting of polymer, metal, glass or ceramic.

3. A filter media as claimed in claim 2 **characterized in that** the polymer used can be polyvinylchloride (PVC), polyethylene (PE), polyurethane (PU), polyvinyldifluoride (PVDF), polytetrafluro-ethylene (PTFE) or polypropylene (PP).

4. A filter plate assembly comprising a base body, filter media and frame **characterized in that** the filter media is mounted in either side the base body and held in place by a frame mounted in face to face contact with the filter media.

5. A filter plate assembly as claimed in claim 4 **characterized in that** the filter media used is as claimed in any one of claims 1 - 3.

6. A filter plate assembly as claimed in claim 4 or claim 5 **characterized in that** said base body has a fluid input port, a fluid output port and filtrate channel.

7. A filter plate assembly as claimed in any one of claims 4 - 6 **characterized in that** the filter media is a replaceable one.

8. A filter plate assembly as claimed in any one of claims 4 - 7 **characterized in that** the thickness of the filter media can be varied.

9. A filter plate assembly as claimed in claim 8 **characterized in that** the chamber depth in which the filter media is to be placed is between 3 mm to 60mm.

10. A filter plate assembly as claimed in claim 4 **characterized in that** the base body is made from any suitable material that can withstand chemical, high temperature, pressure or mechanical stress.

11. A filter plate assembly as claimed in claim 4 **characterized in that** the shape of the assembled filter plate is square, round, rectangular, polygon or any other suitable shape.

12. A filter plate assembly as claimed in claim 10 **characterized in that** the material used in making the base body is an alloy, stainless steel or polypropylene.

13. A filter plate assembly as claimed in any one of claims 4 to 12 **characterized in that** the filter plate assembly is used in a filter press.
